(19) Europäisches Patentamt
European Patent Office
Office européen des brevets

(11) EP 0 492 664 B1

## (12) EUROPEAN PATENT SPECIFICATION

(45) Date of publication and mention
of the grant of the patent:
**12.06.1996  Bulletin 1996/24**

(51) Int Cl.$^6$: **G01N 11/04**

(21) Application number: **91122325.3**

(22) Date of filing: **27.12.1991**

(54) **Method and device for measurement of viscosity of liquids**

Verfahren und Gerät zur Viskositätsmessung von Flüssigkeiten

Méthode et dispositif pour mesurer la viscosité des fluides

(84) Designated Contracting States:
**DE FR GB**

(30) Priority: **28.12.1990 JP 418855/90**

(43) Date of publication of application:
**01.07.1992  Bulletin 1992/27**

(73) Proprietor: **NISSHO CORPORATION
Osaka-shi, Osaka-fu (JP)**

(72) Inventors:
• **Taniguchi, Koichi
  Funabashi-shi, Chiba-ken (JP)**

• **Ogawa, Kohei
  Toshima-ku Tokyo (JP)**

(74) Representative: **VOSSIUS & PARTNER
Postfach 86 07 67
81634 München (DE)**

(56) References cited:
**EP-A- 0 337 821**

• **PHYSICS EDUCATION vol. 10, no. 2, March 1975,
BRISTOL, UK, pages 102 - 103; C. BOWLT: 'A
simple capillary viscometer'**

**Description**

The present invention relates to a method and device for measurement of a viscosity of liquids and, more particularly, a method and device applicable to measurement of the viscosity of bloods.

It is well-known that the health conditions of a person influence the viscosity of bloods. In fact, the viscosity of blood of a person who suffers from anemia, chronic renal insufficiency requiring hemodialysis, myocardial infarction, diabetes mellitus or malignant tumor, differs greatly from that of a person in normal health. In advanced nations, with increase in aged population, adult diseases such as, for example, myocardial infarction, thrombo-embolism and diabetes mellitus are gradually increasing. Thus, it can be said that the measurement of the viscosity of bloods is an important and effective factor essential for therapy and/or prevention of diseases.

As is known, the blood is non-Newtonian in its flow characteristics, whereas the blood plasma behaves Newtonian. It is said, therefore, that the non-Newtonian behaviors of the blood result from the presence of blood corpuscles suspended in the blood plasma. In particular, it is said that factors which have influences on the flow characteristics of the blood are the orientation of blood corpuscles and their various shapes including disc shapes with concave surfaces, streamlined shapes or projectile shape. The effect of such factors on the flow characteristics varies with a period of time elapsed from the blood collecting, and is affected by addition of other substances such as, for example, anticoagulants to the blood. Thus, it can be said that the best way to determine the flow characteristics of blood including its non-Newtonian behaviors is to choose the blood running in the body as the object of the measurement.

However, there is no viscometry which makes it possible to directly measure the flow characteristics of the blood running in the body. To this end, it is inevitable to use the collected blood as the object of measurement. It is therefore required to measure the flow characteristics of the blood correctly in the least time possible after blood-collecting, as well as to collect the blood without incorporating any other materials such as anticoagulants into the blood.

In addition, in order to adapt rheological blood tests to a routine clinical medicine, it is required to satisfy the following three conditions: (a) the measurement can be made with the natural blood; (b) the measurement can be made instantly at the bed side; and (c) the viscometer is easy to operate and operable for any person.

So far, various devices have been developed to measure the viscosity of liquids or solutions. In the sphere of clinical medicine, however, there have been employed two devices, i.e., a capillary viscometer and a rotation viscometer. In the former, the viscosity of a liquid is measured by introducing the liquid into the capillary viscometer, and then causing the liquid to flow under external forces such as the gravitational force through a capillary or a fine tube of uniform bore to obtain the time required for its meniscus to pass through between predetermined levels. The measurement is carried out several times at various flow rates and under pressure heads resulting from a length of the capillary. Such a capillary viscometer has been used widely to measure the viscosity of blood plasma. However, it is rarely the case that the capillary viscometers are applied to measure the viscosity of blood as the natural blood is non-Newtonian in the flow characteristics.

The measurement of the viscosity of bloods has generally been carried out with the rotation viscometers. A typical rotation viscometer comprises two concentric cylinders, the inner or outer cylinder being rotated in or rotated around the fixed outer or inner cylinder. In such a viscometer, the liquid is placed between two cylinders and either of the cylinders is rotated around its axis to measure its torque.

However, the rotation viscometers have the following disadvantages: (a) several measurements must be made on the same blood at different shear stresses; (b) calculations are troublesome and lead to noticeable errors as they require graphical differentiation of logarithmic values; (c) special and unstable flows such as Taylor vortex takes place at high rotating rates; (d) the liquid to be examined generates heat by its viscosity; (e) there is a fear of causing deflection of blood corpuscles by means of the centrifugal force; (f) the measurement for each specimen takes a long time; and (g) the viscometer is troublesome to handle as the viscometer must be cleaned every measurement by washing it with water and then drying the same to remove the blood adhered thereto.

To solve these problems, various new methods employing a roller pump system or a hollow fiber module have been proposed to measure the viscosity of bloods. However, none of the viscometers of the prior art satisfies all the conditions required for application to the clinical medicine.

EP-A-0 337 821 discloses a system for measuring a continuous profile of viscosity versus shear rate of a non-Newtonian liquid such as blood. The measurement is carried out by a series of steps of introducing a test liquid into a system using a syringe, filling a U-shaped capillary and partially filling two chambers so as to establish air-liquid interfaces in the chambers, connecting the chamber with pressure-measuring means through a three-way valve, replacing the syringe with an air-filled syringe or other pressurization means, applying a pressure to the chamber through a three-way valve until the pressure output reaches a predetermined value, venting the chamber to the atmosphere by the three-way valve to allow the liquid to flow from the space to the chamber through the capillary, and sensing the changing pressure of the chamber with time during the flow.

Physics Education, Vol. 10, No. 2, March 1975, Bristol, GB, pages 102-103, C. Bowlt: "A simple capillary viscometer" employs a syringe and a hypodermic needle. Said viscometer requires repeated measurement of time under various pressures to determine the relationship between the shear rate and shear stress required for determination of viscosity. Thus, it is difficult to achieve correct and rapid measurement of viscosity of non-Newtonian fluid.

It is therefore an object of the present invention to provide a method for measurement of viscosities of liquids, which makes it possible to achieve correct and rapid measurement of the viscosity of a liquid with ease, using a small amount of the liquid.

Another object of the present invention is to provide a device for measurement of viscosity of liquids or a viscometer, which is compact in structure, easy to operate and transport, and low in the manufacturing cost.

These and other objects of the present invention are achieved with the features of the claims.

These and other objects and features of the present invention will become apparent from the following description with reference to the accompanying drawings, which show, by way of example only, one preferred embodiment thereof.

Fig. 1 is a schematic diagram of a device for measurement of viscosity of liquids embodying the present invention;

Fig. 2 is a section view of a tubular vessel employed in the device of Fig. 1, with a connecting needle being attached thereto;

Fig. 3 is a section view of an essential part of the device of Fig. 1, illustrating the tubular member being charged with a liquid to be measured;

Fig. 4A and 4B are flow charts showing the sequence of operation of a computer used in the device of Fig. 1 to calculate the viscosity of liquid;

Fig. 5 is a graph showing the relationship between the shear stress and the shear rate of the blood;

Fig. 6 is a graph showing the ratio of the measured viscosity and the true viscosity, obtained using water and viscosity standards for calibration of viscometer;

Fig. 7 is a graph showing the viscosity of the same blood measured by the device of Fig. 1;

Fig. 8 is a graph showing the viscosity of bloods measured at various hematocrit values.

Fig. 9 is a graph showing the relationship between the shear stress and the shear rate of an emulsion of hexane and water; and

Fig. 10 is a graph showing the relationship between the shear stress and the shear rate of an aqueous solution of polyacryl amide.

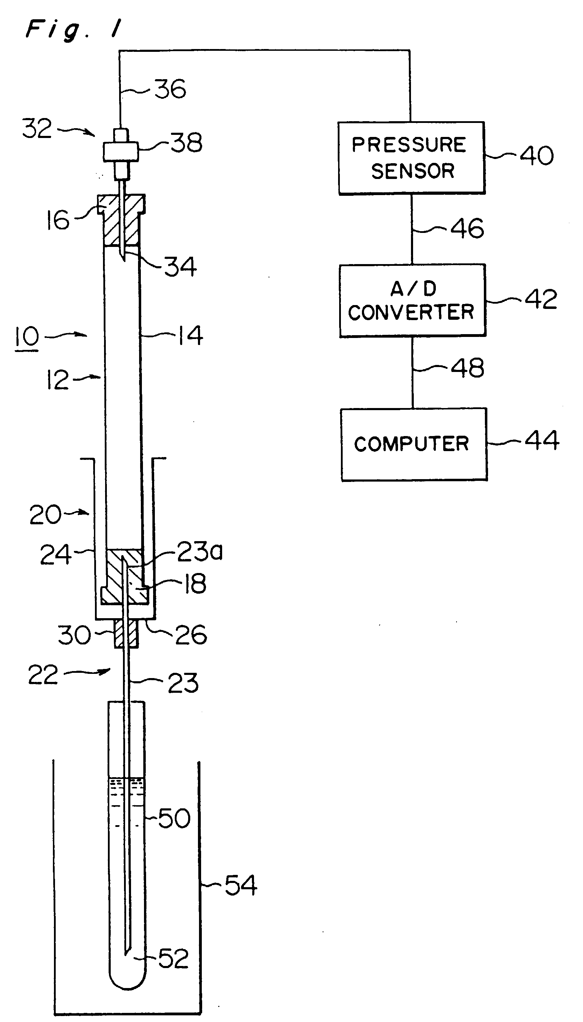

Referring now to Fig. 1, there is shown a schematic diagram of a device for measurement of viscosity of liquids, i.e., a viscometer, 10, embodying the present invention. The device 10 comprises a tubular vessel 12, a suction tube assembly 20, a liquid container 50, a pressure sensor 40, an A/D converter 42 electrically connected to the sensor 40, and a computer 44 electrically connected to the A/D converter 42.

The tubular vessel 12 comprises a tubular body 14 of uniform bore with open ends. This tubular body 14 is made of glass or a plastic material. The tubular body 14 is previously evacuated to a given pressure, and hermetically sealed by a pair of rubber-like stoppers 16 and 18 fitted in the openings of the tubular body 14 to maintain its reduced pressure. In this embodiment, the vessel is evacuated to a reduced pressure, for example, a pressure which is lower than the atmospheric pressure by 180 mmHg. The stoppers 16, 18 are made of an elastic material, preferably, butyl rubber. The stopper may be tapered or provided at its one end with a flange to prevent it from falling in the tubular body 14 by the difference in pressure between the internal pressure of the vessel and the atmosphere.

The suction tube assembly 20 comprises a hollow piercing needle 22, which has a sharp piercing tip 23a at one end of a cannula 23 and a hub 30 arranged close to the tip 23a, and a vessel holder 24 concentrically arranged on the piercing needle 22. The cannula 23 is composed of a fine tube of uniform bore, made of a metal. Preferred materials for the cannula 23 are stainless steels such as, for example, SUS 304 defined by JIS.

The vessel holder 24 comprises a short tubular member closed at one end and is so designed that it has a length shorter than that of the tubular body 14, and an inner diameter greater than the outer diameter of the tubular body 14 to allow the latter to be moved smoothly. The piercing needle 22 is provided with a male screw on a surface of the hub 30, so that it engages with a female screw provided in the center of the bottom 26 of the holder 24 to prevent it from axial movement with respect to the holder 24. The position of the hub 30 is so determined that the piercing tip 23a of the needle 22 can extend into the interior of the vessel 12 when the needle 22 is inserted into the elastic stopper 18 until the bottom 26 of the holder 24 comes into contact with the bottom of the stopper 18.

The liquid container 50 is charged with a liquid to be examined, and placed in a thermostat 54 to keep its temperature constant. Any container may be used, but it is preferred to use a commercially available test tube. Also, any thermostat may be used, but it is preferred to use a thermostat so designed that several containers 50 can be charged therein at a time, to improve efficiency of examination.

The pressure sensor 40 is connected to the tubular vessel 12 by means of a connecting device 32 to detect a pressure in the vessel 12. The connecting device 32 comprises a hollow piercing needle 34 with a hub 38, and a connecting tube 36 made of a metal. The connecting tube 36 is generally made of a metal such as a stainless steel, and hermetically connected at its one end to the hub 38 and at the other end to the pressure sensor 40 to correctly transfer the internal pressure of the vessel 12 to the sensor 40.

The pressure sensor 40 is electrically connected to the A/D converter 42 by lead wires 46, which is in turn connected to the computer 44 by lead wires 48. The sensor 40 detects the internal pressure of the vessel 12 and converts it to an electrical signal corresponding to that pressure. The electric signal from the sensor is fed to the A/D converter 40 where the analog signal is converted to digital signals. This digital signals are fed to the computer 44 to determine the viscosity of the liquid to be examined. The computer 44 executes a viscosity measuring program stored in its memories (ROM), as mentioned below. Any commercial computers may be used for this purpose.

The flow rate of the liquid running through the fine tube varies with the viscosity of the liquid and the change rate of the internal pressure of the tubular vessel 12 for a given period of time depends on the flow rate of the liquid. To this end, the internal pressure of the vessel 12 is detected by the pressure sensor 40 at given intervals and transferred through the A/D converter 42 to the computer 44 where the viscosity of the liquid is determined.

It is essential for the piercing needle 22 to have a sharp tip at its one end to be pierced into the elastic stopper 18, but there is no need to provide a sharp cut tip on both ends of the cannula 23.

In the above embodiment, the piercing needle 22 is composed of an elongated hollow metal tube, or an elongated cannula with a small radius, but this piercing needle may take any desired structures. For example, the piercing needle 22 may be constituted by into two parts, i.e., a fine tube of a metal with a sharp end, and a fine tube of a plastic material, connected each other by a joint.

Using the device of the above construction, the method for measurement of a viscosity of liquids according to the present invention is carried out in the following manner.

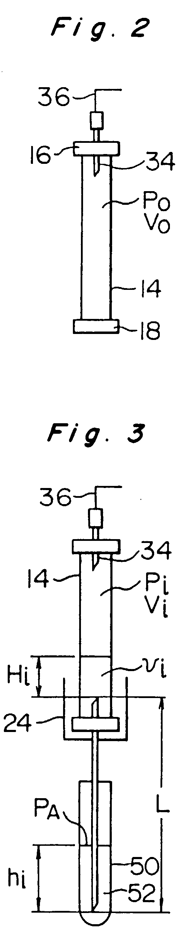

The vessel holder 24 is held vertically by a suitable holder (not shown) and the piercing needle 34 of the connecting device 32 is pierced into the elastic stopper 16 until its lower end extends into the interior of the vessel 12, as shown in Fig. 2.

After or before the above operation, the container 50 containing a liquid to be measured, 52, is placed in the thermostat 54 maintained at a test temperature, and allowed to stand for a certain period enough to reach the test temperature.

Then, the free end or lower end of the piercing needle 22 is dipped into the liquid 52 in the container 50.

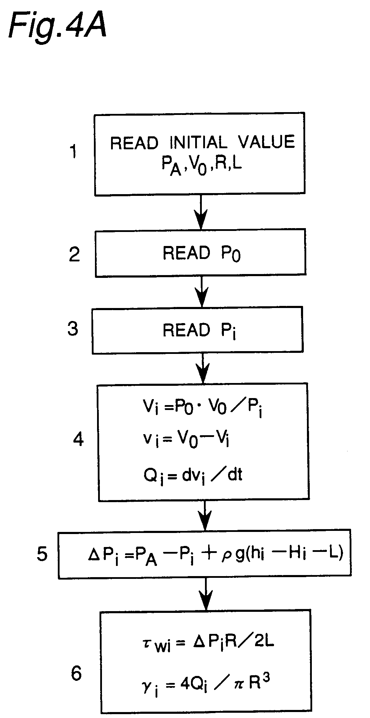

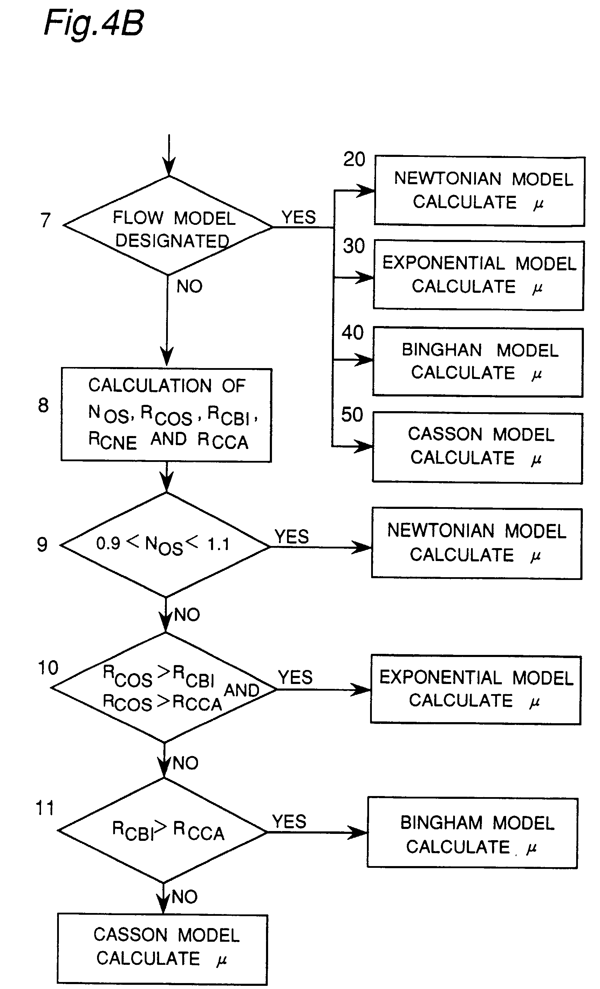

On the other hand, the computer 44 is turned on and receives the atmospheric pressure, $P_A$, the initial volume of the vessel $V_0$, the radius of the fine tube or capillary, R, and the length of the piercing needle 22, L, through a key board (not shown) at step 1 in Fig. 4. The initial internal pressure of the vessel, $P_0$, is measured via the sensor 40 and A/D converter 42, at step 2.

Then, the piercing tip 23a of the cannula 23 is pierced into the stopper 18. In Fig. 1 or 2, the piercing needle 22 is illustrated as being terminated in the stopper 18, but the cannula 23 is further pierced into the elastic stopper 18 until its piercing tip 23a extends into the interior of the vessel 12 through the stopper 18, as shown in Fig. 3. As soon as the piercing tip 23a enters into the interior of the vessel 12, the liquid 52 in the container 50 begins to flow into the vessel 12 through the cannula 23 by the difference between the pressure acting on the meniscus of the liquid 52 (actually, the atmospheric pressure) and the internal pressure of the tubular vessel 12.

With increase in the amount of the liquid 52 charged into the vessel 12, as illustrated in Fig. 3, the volume of the uncharged space of the vessel 12 reduces, while the internal pressure of the vessel 12 increases. The inflow of the liquid continues until the internal pressure of the vessel 12 becomes equal to the hydrostatic pressure at the lower end of the fine tube, which can be regarded to be identical with the atmospheric pressure, $P_A$.

During the above period, the internal pressure, $P_i$, of the vessel 12 is measured and converted into electric signals by the pressure sensor 40. The output signals are fed to the A/D converter 42 where the signals from the sensor 40 are converted to digital signals.

The digital signals from the A/D converter 42 are supplied to the computer 44 via I/O ports (not shown) of the latter at a certain interval of time, $\Delta t$, whereby calculations are carried out at step 4 to determine the charged amount of the liquid in the vessel at time $t_i$, $v_i$, the volume of the uncharged space of the vessel at time $t_i$, $v_i$, and the flow rate of the liquid, $Q_i$.

Then, the program proceeds to step 5 where the pressure difference, $\Delta P_i$, between both ends of the fine tube at time $t_i$ is calculated. The calculated values of $Q_i$ are stored in memories (RAM) of the computer along with the values of pressure difference $\Delta P_i$. The pressure change may be converted to the volume change of the uncharged space of the vessel 12 on the basis of Boyle's law.

Then, the program proceeds to step 6 where the shear stress, $\tau_i$, and the apparent shear rate, $\gamma_{ai}$, are respectively calculated from the flow rate of the liquid, $Q_i$, and the pressure difference, $\Delta P_i$.

The equations required in calculation are derived from the following theoretical considerations. Assuming that the product of the pressure in the vessel and the volume of uncharged space of the vessel is constant, a pressure $V_i$ in the uncharged space of the vessel at time $t_i$ is given by equation 1,

$$P_0V_0 = P_iV_i \tag{1}$$

where $P_0$ is the initial pressure at time $t_0$, $V_0$ the initial volume at time $t_0$, and $P_i$ the pressure at time $t_i$.

Since the volume, $v_i$, of the liquid in the vessel at time $t_i$ is obtained by equation 2, the flow rate of the liquid, $Q_i$, at time $t_i$ is given by equation 3:

$$v_i = V_0 - V_i \tag{2}$$

$$Q_i = dv_i/dt \tag{3}$$

On the other hand, the pressure difference, $\Delta P_i$, between ends of the fine tube at time $t_i$ is given by equation 4,

$$\Delta P_i = (P_A + \rho gh_i) - (P_i + \rho gH_i) - \rho gL \tag{4}$$

where $\rho$ is the density of the liquid, g is the acceleration of gravity, $P_A$ is the atmospheric pressure, $P_i$ is the pressure acting on the meniscus of liquid in the vessel at time $t_i$, $h_i$ is the length of the needle 23 being immersed in the liquid at time $t_i$, $H_i$ is the distance between the end of the needle 23 and the meniscus of the liquid 52 in the vessel 12 at time $t_i$, and L is the length of the needle, as illustrated in Fig. 3. The values of $h_i$ and $H_i$ can be obtained in the process of calculation of $Q_i$, provided that the vessel 14 and container 50 are of a uniform bore and that the thickness of the piercing needle 23 can be neglected.

Since the fine tube 23 and the vessel 14 are of uniform bore, $h_i$ and $H_i$ in the above equation are respectively obtained during the course of determination of the value of $Q_i$, i.e., by diving the charged amount of the liquid with the cross-sectional area of the fine tube 23 or vessel 14.

By using the fine tube of which the length is not less than 260 times the inner diameter of the fine tube, the end effects in charge or discharge on the pressure difference of the fine tube can be minimized to less than 5 %.

Rearrangement of equation 4 provides

$$\Delta P_i = P_A - P_i + \rho g(h_i - H_i - L) \tag{5}$$

The shear stress, $\tau_{wi}$, and the apparent shear rate, $\gamma_{ai}$, at time $t_i$, are given by the following equations.

$$\tau_{wi} = \Delta P_i R/(2L) \tag{6}$$

$$\gamma_{ai} = 4Q_i/(\pi R^3) \tag{7}$$

In practice, the pressure difference, $\Delta P_i$, is obtained as the average value of two measurements detected at an interval of time, $\Delta t$, so that the flow rate of the liquid, $Q_i$, is obtained as the average value by

$$Q_i = (v_i - v_{i-1})/\Delta t \tag{3'}$$

Thus, the shear stress and the shear rate are obtained as the average values by the following equations,

$$\tau_w = \Delta PR/(2L) \tag{8}$$

$$\gamma_a = 4Q/(\pi R^3) \tag{9}$$

where $\gamma_a$ is the apparent shear rate or apparent velocity gradient, and R is the radius of the fine tube.

The general velocity gradient is a function of the shear stress, $\gamma(\tau_w)$, and is given by equation 10,

$$\gamma(\tau_w) = -du/dr = 3\gamma_a/4 + (\tau_w/4)(d\gamma_a/d\tau_w) \tag{10}$$

On the other hand, the viscosity of the liquid flowing in the steady state is defined as the ratio of shear stress to the apparent shear rate at a point on the wall, and given by the following equations corresponding to the flow model of the liquid.

If the liquid is a Newtonian fluid, the apparent shear rate is related to the shear stress by equation 11,

$$\gamma_a = \alpha\tau_w \tag{11}$$

where $\alpha$ is constant.

If the liquid is a exponential fluid, the apparent shear rate is related to the shear stress by equation 12,

$$\gamma_a = (\alpha\tau_w)^{1/n} \tag{12}$$

where n is power law exponent.

If the liquid is a Bingham fluid, the apparent shear rate is related to the shear stress by equation 13,

$$\gamma_a = \alpha(\tau_w - \tau_{BI}) \tag{13}$$

where $\tau_{BI}$ is given from the yield stress by the following equation:

$$\tau_r = (3/4)\tau_{BI}$$

If the liquid is a Casson fluid, the apparent shear rate is related to the shear stress by equation 14,

$$\gamma_a^{1/2} = \alpha(\tau_w^{1/2} - \tau_{CA}) \tag{14}$$

where $\tau_{CA}$ is Casson yield stress given from the yield stress, $\tau_r$, by the following equation:

$$\tau_r = (49/64)\tau_{CA}^2$$

Accordingly, the flow characteristics, $\gamma(r_w)$, and the coefficient of viscosity, $\mu$, are respectively given by equations 15 to 18, which are derived from the above equations 8 to 14.

(1) Newtonian model

$$\mu = 1/\alpha = \tau_w/\gamma_a \tag{15}$$

$$\gamma(\tau_w) = \gamma_a$$

(2) Exponential model

$$\mu = (4n/(\alpha(3n+1)))^n(\gamma_a)^{n-1} \tag{16}$$

where n is power law exponent.

$$\gamma(\tau_w) = \alpha((3n+1)/4n)\tau_w^{1/n}$$

(3) Bingham model

$$\mu = 1/\alpha \tag{17}$$

$$\gamma(\tau_w) = \alpha(\tau_W + 3\beta)/4)$$

where $\beta$ is given by equation: $\tau_{wi} = 3\beta/4$,
(4) Casson model

$$\mu = \alpha^2 \tag{18}$$

$$\gamma(\tau_w)^{1/2} = (\tau_w^{1/2} - \tau_{CA})^{/\alpha}$$

where $\tau_{CA}$ is the Casson yield stress.

Thus, if the flow characteristics of the liquid is previously known to the operator, the equation to be used can be manually designated by means of a key board (not shown) of the computer.

After completing calculation of the shear stress, $\tau_i$, and the apparent shear rate, $\gamma_{ai}$, judgement is made at step 7 as to whether the flow model of the liquid is designated by the operator. If the flow model has been designated, the program proceeds to the designated step 20, 30, 40 or 50 where a coefficient of viscosity, $\mu$, is determined by one of equations 15 to 18 mentioned above.

However, if the flow model of the liquid to be examined is not known to the operator, it is impossible to designate the flow model of the liquid. To solve this problem, the device of the present invention further includes a means for determination of the flow characteristics of the liquid. This may be done automatically in the following manner.

If the flow model of the liquid is not designated, the program proceeds to step 8 where the structural viscosity index for the exponential flow model, $N_{os}$, a correlation coefficient for the Newtonian model, $R_{CNE}$, a correlation coefficient for the Bingham model, $R_{CBI}$, and a correlation coefficient for the Casson model, $R_{CCA}$, are calculated from the values of $\tau_{wi}$ and $\gamma_{ai}$ stored in the memory of the computer. The equations to be used in calculations are:

$$N_{os} = \frac{\Sigma (\log \gamma_{ai} - \frac{\Sigma \log \gamma_{ai}}{CN})(\log \tau_{wi} - \frac{\Sigma \log \tau_{wi}}{CN})}{\Sigma (\log \gamma_{ai} - \frac{\Sigma \log \gamma_{ai}}{CN})^2}$$

where CN is the number of data.

$$R_{CNE} = \frac{\Sigma \gamma_{ai} \cdot \tau_{wi}}{(\Sigma \gamma_{ai}^2 \cdot \Sigma \tau_{wi}^2)^{1/2}}$$

$$R_{COS} = \frac{\Sigma \, (\log \gamma_{ai} - \frac{\Sigma \log \gamma_{ai}}{CN}) \, (\log \tau_{wi} - \frac{\Sigma \log \tau_{wi}}{CN})}{\{\Sigma \, (\log \gamma_{ai} - \frac{\Sigma \log \gamma_{ai}}{CN})^2 \cdot \Sigma \, (\log \tau_{wi} - \frac{\Sigma \log \tau_i}{CN})^2\}^{1/2}}$$

$$R_{CBI} = \frac{\Sigma \, (\gamma_{ai} - \frac{\Sigma \gamma_{ai}}{CN}) \, (\tau_{wi} - \frac{\Sigma \tau_{wi}}{CN})}{\{\Sigma \, (\gamma_{ai} - \frac{\Sigma \gamma_{ai}}{CN})^2 \cdot \Sigma \, (\tau_{wi} - \frac{\Sigma \tau_{wi}}{CN})^2\}^{1/2}}$$

$$R_{CCA} = \frac{\Sigma \, (\gamma_{ai}^{1/2} - \frac{\Sigma \gamma_{ai}^{1/2}}{CN}) \, (\tau_{wi}^{1/2} - \frac{\Sigma \tau_{wi}^{1/2}}{CN})}{\{\Sigma \, (\gamma_{ai}^{1/2} - \frac{\Sigma \gamma_{ai}^{1/2}}{CN})^2 \cdot \Sigma \, (\tau_{wi}^{1/2} - \frac{\Sigma \tau_{wi}^{1/2}}{CN})^2\}^{1/2}}$$

Then, the flow model of the liquid being examined is determined at steps 9 to 11 on the basis of the calculated values of these correlation coefficients. If the value of $N_{OS}$ is greater than 0.9 but smaller than 1.1, the liquid is judged at step 9 to be a Newtonian fluid. If the value of $N_{OS}$ is out of the above range, the programs proceeds to step 10 where judgement of the flow model is made on the basis of the values of $R_{COS}$, $R_{CBI}$ and $R_{CCA}$. If $R_{COS}$ is greater than $R_{CBI}$ and $R_{CCA}$, the liquid is judged to be an exponential liquid. If $R_{COS}$ is not greater than $R_{CBI}$ or $R_{CCA}$, the program exceeds to step 11 where the comparison is made as to whether the value of $R_{CBI}$ is greater than that of $R_{CCA}$. If the value of $R_{CBI}$ is greater than that of $R_{CCA}$, the liquid is judged to be a Bingham fluid. If the value of $R_{CBI}$ is not greater than that of $R_{CCA}$, the liquid is judged to be a Casson fluid.

After the flow model of the liquid is determined, the coefficient of viscosity of the liquid is calculated by the following equation.

(1) Newtonian model

$$\mu = \alpha = \frac{\Sigma \gamma_{ai} \cdot \tau_{wi}}{\Sigma \gamma_{ai}^2}$$

(2) Exponential model

$$\alpha = \exp \, (\frac{\Sigma \log \tau_{wi}}{CN} - \frac{N \cdot \Sigma \log \gamma_{ai}}{CN})$$

$$\mu = \alpha \, (\frac{4}{3n+1})^n \cdot 5000^{n-1}$$

(3) Bingham model

$$\mu = \alpha = \frac{\Sigma \, (\gamma_{ai} - \frac{\Sigma \gamma_{ai}}{CN}) \, (\tau_{wi} - \frac{\Sigma \tau_{wi}}{CN})}{\Sigma \, (\gamma_{ai} - \frac{\Sigma \gamma_{ai}}{CN})^2}$$

$$\tau_r = \frac{3}{4} \, \tau_{BI}$$

(4) Casson model

$$\alpha = \frac{\Sigma \, (\gamma_{ai}^{1/2} - \frac{\Sigma \gamma_{ai}^{1/2}}{CN}) \, (\tau_{wi}^{1/2} - \frac{\Sigma \tau_{wi}^{1/2}}{CN})}{\Sigma \, (\gamma_{ai}^{1/2} - \frac{\Sigma \gamma_{ai}^{1/2}}{CN})^2}$$

$$\mu = \alpha^2$$

$$\tau_r = \frac{49}{64} \, \tau_{CA}^2$$

As can be seen from the above, the method according to the present invention is characterized by the fact that it comprises the steps of detecting the pressure difference which continuously varies with time, and continuously calculating the corresponding flow rate of the liquid to be examined on the basis of Boyle's Law from the detected pressure differences. Thus, there is no need to repeat the measurement on the same liquid. In contrast therewith, it is essential for the conventional method to make the measurements on the same liquid several times at various pressure difference between the capillary ends.

Also, the method of the present invention makes it possible to determine the viscosity of liquids with a small amount of the liquid, for example, 5 to 8 ml in the short time of 1 or 2 minutes, which in turn makes it possible to considerably improve efficiency of viscosity measurement. Further, the method of the present invention is effective for the measurement of the viscosity of bloods since it is preferred to complete the measurement in a few minutes after blood-collecting.

According to the present invention, data can be collected in detail as occasion demands, thus making it easy to achieve graphic differentiation with a high accuracy of better than 5 %. It is possible with the present invention to measure the viscosity with high reproducibility in a wide range of the shear rate.

The present invention makes it possible to measure the viscosity of the blood without causing hemolysis as the time required for the blood to pass through the fine tube is considerably short as compared with the conventional methods. The present invention makes it possible to use the same blood for the measurements of other clinical purpose.

The device of the present invention is simple to operate, and very compact as compared with the conventional ones.

Since some parts of the device such as the vessel and fine tube, which are brought into in contact with the liquid, are disposable, there is no fear of infection even if the device is used to measure the viscosity of bloods contaminated by pathogenic bacteria such as hepatitis virus.

EXPERIMENT 1

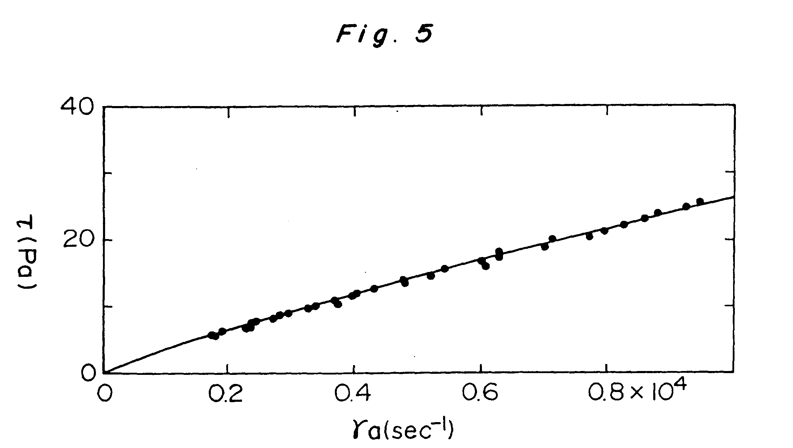

Using the above device, the measurements of the viscosity of the human blood were carried out at 27 °C in the manner mentioned above. Results are shown in Fig. 5.

It has been said that the human blood is a Casson fluid. As can be seen from Fig. 5, it can be said that the human blood can be regarded as a Newtonian fluid, although it behaves non-Newtonian in the flow characteristics and may be regarded as a Bingham fluid or an exponential fluid when the shear rate is considerably small.

EXPERIMENT 2

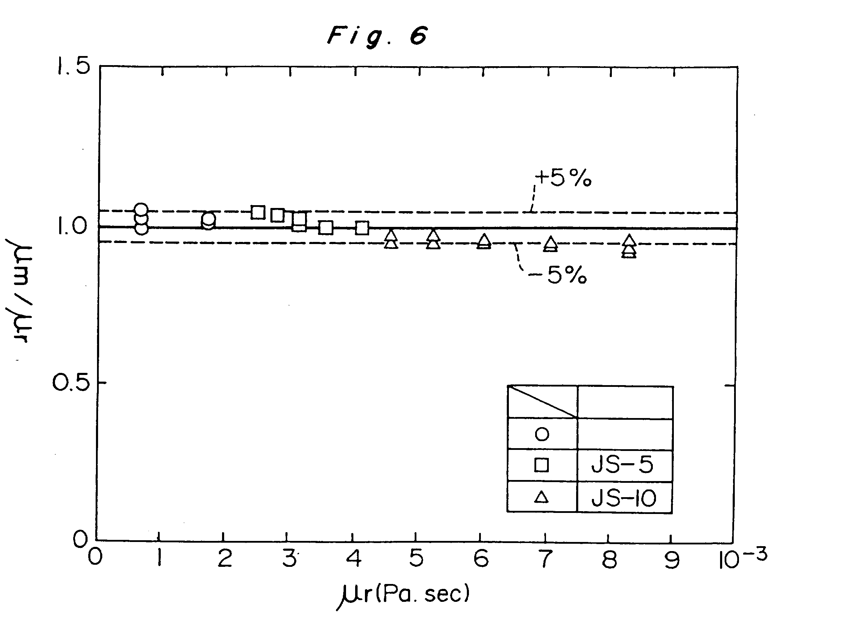

The calibration of the device was made using water and viscosity standards defined in JIS Z8809 (JS 5 and JS 10 made by Japan Shell oil corporation). The water was filtered after distillation and ion-exchange. In case of water, the calibration was carried out at the shear rate ranging from 50 to 10000/sec, while the shear rate for the viscosity standards were 3000 to 18000/sec. Results are shown in Fig. 6. In this figure, the ratios of the viscosity measured, $\mu_m$, to the actual viscosity, $\mu_r$, are plotted as a function of the actual viscosity, $\mu_r$.

As can be seen from the results shown in Fig. 6, errors of measurements remain less than ± 5 % when the viscosity is less than $10^{-2}$ Pa.s, thus the viscometer of the present invention can be put into practical use without causing any problems. However, it is also possible to measure the liquid with the viscosity of more than $10^{-2}$ Pa.s, by suitable determination of the length of fine tube or piercing needle, capacity of the tubular vessel, the initial pressure (or vacuum) in the tubular vessel and the like. Causes for the errors may be a delay in response of the flow change to the change in pressure difference, and response detection of pressure converter.

EXPERIMENT 3

The following discussion is provided under the assumption that the flow characteristics of the blood may be represented by a Newtonian model.

When charging out the measurements of the viscosity of human blood, the shear rate varies from 200 to 9000/sec. This range exceeds the range of shear rate being corrected, but no problem occurs as the most of the data for use in determination of a flow curve are included in the range.

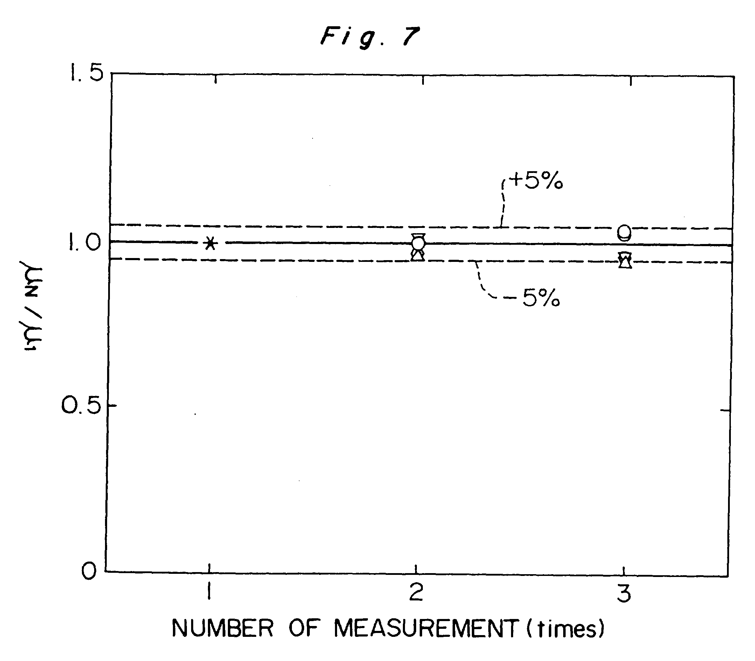

In general, it is said that the blood causes hemolysis when placed under high shear rate. To observe effects of high shear rate on the human blood, the measurements were carried out with the same blood for several times. That is, the blood subjected to the measurement of viscosity was pored to the glass tube again, and then subjected to the measurement of viscosity. Results are shown in Fig. 7. A ratio of the $\mu_N/\mu_1$ is plotted as a function of the times of measurement, N.

From the results in Fig. 7, it can be understood that the viscometer of the present invention scarcely has effects on the blood even if measurements are carried out three times, as the ratio is in the range of 0.95 to 1.03. By measurement of hemolysis with the centrifuge, the hemolysis of the blood was slightly observed in only one of the five examples. It is believed that this results from the fact that the time required for passing through the fine tube is very short and ranges from 0.1 to 0.3 seconds. Further, it will be understood that the temperature change of the blood can be neglected as the time during which the blood passes through the fine tube is considerably short.

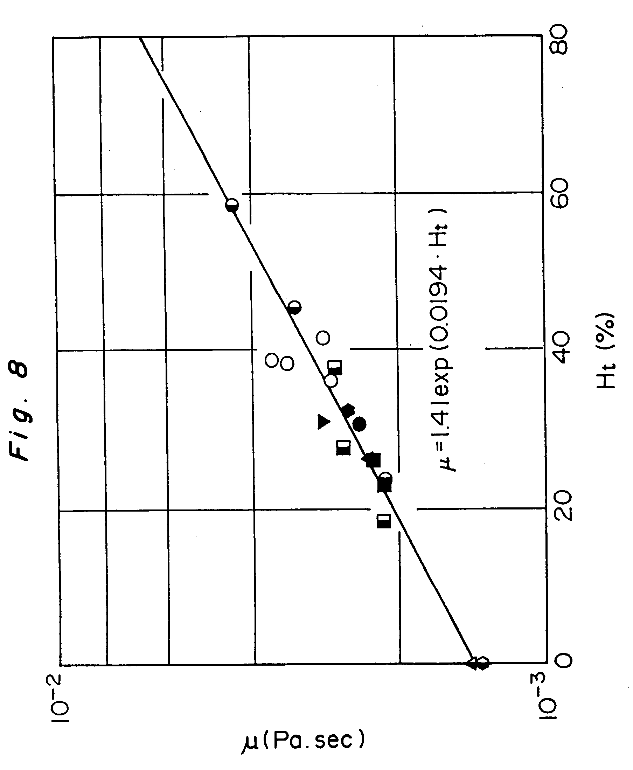

The bloods were directly drawn or collected from a person in normal health and anemic inpatients and subjected to measurements of viscosity. Separate from the above, the bloods collected from a person in normal health were centrifuged to separate red blood cell from the blood plasma, and the red cell was again mixed with the blood plasma in various ratios to prepare samples having various hematocrit values, i.e., a volume percentage of red blood cell to all the components of the blood. These blood samples were also subjected to the measurement of viscosity. Results are shown in Fig. 8. In this figure, circles are data for the blood of normal persons, half black circles show the data for the samples with an adjusted hematocrit value, and black circles show data for the blood collected from anemic patients.

As can be seen from the data shown in Fig. 8, the values for the viscosity of the blood taken from the person in normal health are about $3.0 \times 10^{-3}$ Pa.s. This shows that the viscosity measurements made on the same samples in the prior viscometer and the viscometer of the present invention give equivalent values for the blood viscosity. Further, the viscosities of the bloods collected from the anemic patients are about 2.4 Pa.s, which agree with the results obtained by using the viscometers of the prior art. It can be understood that the viscosity of the blood increases with the value of hematocrit. This agrees well with the results by the viscometers of the prior art. From the above results, the viscometer of the present invention makes it possible to measure the viscosity of the human blood correctly and is applicable to clinical observations.

Experiment 4

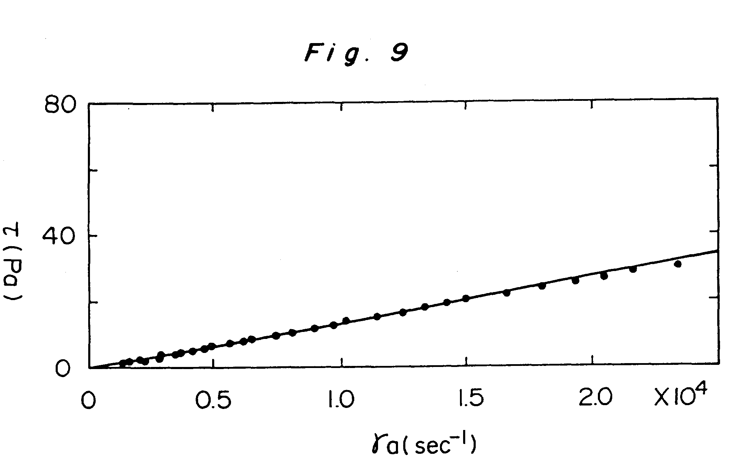

There were prepared emulsions of an O/W type composed of water and hexane, which were then subjected to measurement of viscosity. The measurements were carried out at 20 °C in the same manner as example 1 with the viscometer having the construction shown in Fig. 1. Results are shown in Fig. 9 as a relationship between the shear rate and shear stress. The same results were reproduced by the experiments. The reproducibility was observed by several experiments.

From the results shown in Fig. 9, it will be seen that the emulsion is regarded as Newtonian. Further, it was observed that the viscosity of the emulsion increases with increase in the ratio of hexane to water.

Experiment 5

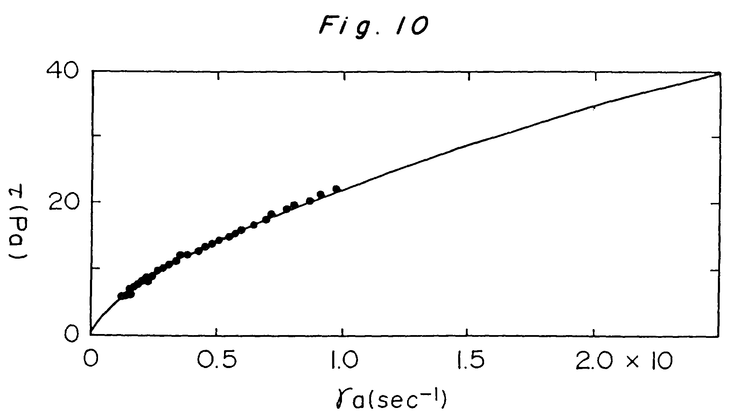

There were prepared aqueous solutions by dissolving polyacryl amide (PAA) in water, known as a viscoelastic fluid, to measure the viscosity with the viscometer of the present invention. The measurements were carried out at various temperatures in same manner as example 1. Results are shown in Fig. 10 as a relationship between the shear rate and shear stress. The same results were reproduced by several viscosity measurements made on the same samples.

From the results shown in Fig. 10, it can be seen that the aqueous solution of PAA behaves as an exponential fluid, i.e., as a non-Newtonian fluid. This shows that the viscometer of the present invention can be applied to measure the viscosity of non-Newtonian fluids.

**Claims**

1. A method for measurement of a viscosity of liquids, comprising the steps of

    (a) inserting one end of a fine tube (22) of uniform bore into one end of a tubular vessel (12) sealed and maintained at a reduced pressure, while dipping the other end of said fine tube (22) in at liquid (50) to be measured, to cause the liquid to flow into said vessel (12) through the fine tube (22) under the influence of difference in pressure between both ends of said fine tube (22),

    (b) detecting an internal pressure of said tubular vessel (12) with a pressure sensor (40) connected to the other end of the vessel to measure a change of an internal pressure of the vessel with passage of time and a change of a flow rate of the liquid passing through said fine tube (22) with passage of time,

    (c) determining a viscosity of the liquid from the change of the internal pressure of said vessel (12) and the change of the flow rate of the liquid on the basis of the following equations:

$$\gamma(\tau_w) = -du/dr = 3\gamma_a/4 + (\tau_w/4)(d\gamma_a/d\tau_w)$$

$$\tau_w = \Delta PR/2L$$

$$\gamma_a = 4Q/\pi R^3$$

where $\gamma(\tau_w)$ is a shear rate, or velocity gradient, of the liquid, $\tau_w$ is a shear stress of the liquid, $\Delta P$ is a pressure difference between both ends of the fine tube (22), R is a radius of the fine tube (22), L is a length of the fine tube, Q is a flow amount of the liquid per unit time, and $\gamma_a$ is the apparent shear rate (or apparent velocity gradient) at a point on the wall.

2. A method according to claim 1 wherein said fine tube is a hollow piercing needle (22).

3. A device for measurement of a viscosity of liquids, comprising

a tubular vessel (12) sealed and maintained to a reduced pressure by a pair of rubber-like stoppers (16,18) fitted in each opening of said vessel (12),
a hollow fine tube (22) of uniform bore adapted to be pierced in one (18) of said stoppers to let it go into said vessel (12),
a pressure sensor (40) adapted to be connected to said vessel (12) by a means (34) for piercing the other stopper (16) to detect an internal pressure of said vessel (12),
an A/D converter (42) electrically connected said pressure sensor (40) to convert its analogue signals to digital signals, and
a computer (44) for processing output signals of the A/D converter (42) to determine a viscosity of the liquid from said output signals and the following equations:

$$\gamma(\tau_w) = -du/dr = 3\gamma_a/4 + (\tau_w/4)(d\gamma_a/d\tau_B)$$

$$\tau_w = \Delta PR/2L$$

$$\gamma_a = 4Q/\pi R^3$$

where $\gamma(\tau_w)$ is a shear rate, or velocity gradient, of the liquid, $\tau_w$ is a shear stress of the liquid, $\Delta P$ is a pressure difference between both ends of the fine tube (22), R is a radius of the fine tube (22), L is a length of the fine tube, Q is a flow amount of the liquid per unit time, and $\gamma_a$ is the apparent shear rate, or apparent velocity gradient at a point on the wall.

**Patentansprüche**

1. Verfahren zur Viskositätsmessung von Flüssigkeiten mit den Schritten:

(a) Einführen eines Endes einer dünnen Röhre (22) mit gleichmäßigem Innendurchmesser in ein Ende eines röhrenförmigen Gefäßes (12), das verschlossen ist und auf einem verringerten Druck gehalten wird, während das andere Ende der feinen Röhre (22) in eine zu messende Flüssigkeit (50) getaucht wird, um zu bewirken, daß die Flüssigkeit unter dem Einfluß einer Druckdifferenz zwischen beiden Enden der dünnen Röhre (22) durch die dünne Röhre (22) in das Gefäß (12) strömt,
(b) Ermitteln eines Innendrucks des röhrenförmigen Gefäßes (12) mittels eines Drucksensors (40), der mit dem anderen Ende des Gefäßes verbunden ist, um eine Änderung des Innendrucks des Gefäßes über die Zeit und eine Änderung der Strömungsgeschwindigkeit der Flüssigkeit, die durch die dünne Röhre (22) strömt, über die Zeit zu messen,
(c) Bestimmen einer Viskosität der Flüssigkeit aus der Änderung des Innendrucks des Gefäßes (12) und der Änderung der Strömungsgeschwindigkeit der Flüssigkeit auf der Grundlage der folgenden Gleichungen:

$$\gamma(\tau_w) = -du/dr = 3\gamma_a/4 + (\tau_w/4)(d\gamma_a/d\tau_w)$$

$$\tau_w = \Delta PR/2L$$

$$\gamma_a = 4Q/\pi R^3$$

wobei $\gamma(\tau_w)$ eine Verformungsgeschwindigkeit oder ein Geschwindigkeitsgefälle der Flüssigkeit, $\tau_w$ eine Schub-

spannung der Flüssigkeit, $\Delta P$ eine Druckdifferenz zwischen beiden Enden der dünnen Röhre (22), R ein Radius der dünnen Röhre (22), L eine Länge der dünnen Röhre, Q eine Strömungsmenge der Flüssigkeit pro Zeiteinheit und $\gamma_a$ die scheinbare Verformungsgeschwindigkeit (oder das scheinbare Geschwindigkeitsgefälle) an einem Punkt an der Wand ist.

2. Verfahren nach Anspruch 1, wobei die dünne Röhre eine hohle Bohrnadel (22) ist.

3. Gerät zur Viskositätsmessung von Flüssigkeiten mit: einem röhrenförmigen Gefäß (12), das mittels eines Paares von gummiähnlichen Stöpseln (16, 18), die in jede Öffnung des Gefäßes (12) eingepaßt sind, verschlossen ist und auf einem verringerten Druck gehalten wird,

einer hohlen dünnen Röhre (22) mit gleichmäßigem Innendurchmesser, die geeignet ist, in einen (18) der Stöpsel gebohrt zu werden, um sie in das Gefäß (12) eindringen zu lassen,
einem Drucksensor (40), der geeignet ist, mittels einer Einrichtung (34) zum Durchbohren des anderen Stöpsels (16) mit dem Gefäß (12) verbunden zu werden, um einen Innendruck des Gefäßes (12) zu ermitteln,
einem A/D-Wandler (42), der mit dem Druckwandler (40) elektrisch verbunden ist, um seine Analogsignale in Digitalsignale umzuwandeln, und
einem Computer (44) zum Verarbeiten von Ausgangssignalen des A/D-Wandlers (42), um eine Viskosität der Flüssigkeit aus den Ausgangssignalen und nach den folgenden Gleichungen zu bestimmen:

$$\gamma(\tau_w) = -\,du/dr = 3\gamma_a/4 + (\tau_w/4)\,(d\gamma_a/d\tau_w)$$

$$\tau_w = \Delta PR/2L$$

$$\gamma_a = 4Q/\pi R^3$$

wobei $\gamma(\tau_w)$ eine Verformungsgeschwindigkeit oder ein Geschwindigkeitsgefälle der Flüssigkeit, $\tau_w$ eine Schubspannung der Flüssigkeit, $\Delta P$ eine Druckdifferenz zwischen beiden Enden der dünnen Röhre (22), R ein Radius der dünnen Röhre (22), L eine Länge der dünnen Röhre, Q eine Strömungsmenge der Flüssigkeit pro Zeiteinheit und $\gamma_a$ die scheinbare Verformungsgeschwindigkeit oder das scheinbare Geschwindigkeitsgefälle an einem Punkt an der Wand ist.

**Revendications**

1. Procédé pour mesurer la viscosité de liquides, comprenant les étapes suivantes :

(a) insérer une extrémité d'un tube fin (22) de diamètre uniforme dans une extrémité d'un récipient tubulaire (12) scellé et maintenu à une pression réduite, tout en plongeant l'autre extrémité dudit tube fin (22) dans un liquide (50) à mesurer, pour amener le liquide à s'écouler dans ledit récipient (12) à travers ledit tube fin (22) sous l'influence d'une différence de pression entre les deux extrémités dudit tube fin (22),
(b) détecter une pression interne dudit récipient tubulaire (12) avec un capteur de pression (40) relié à l'autre extrémité du récipient pour mesurer une variation d'une pression interne du récipient en fonction du temps et une variation d'un débit du liquide s'écoulant à travers ledit tube fin (22) en fonction du temps,
(c) déterminer une viscosité du liquide à partir de la variation de la pression interne dudit récipient (12) et de la variation du débit du liquide sur la base des équations suivantes :

$$\gamma(\tau_w) = -\,du/dr = 3\gamma_a/4 + (\tau_w/4)\,(d\gamma_a/d\tau_w)$$

$$\tau_w = \Delta PR/2L$$

$$\gamma_a = 4Q/\pi R^3$$

dans lesquelles $\gamma(\tau_w)$ est un gradient de cisaillement, ou gradient de vélocité, du liquide, $\tau_w$ est une contrainte de cisaillement du liquide, $\Delta P$ est une différence de pression entre les deux extrémités du tube fin (22), R est un rayon du tube fin (22), L est une longueur du tube fin, Q est une valeur d'écoulement du liquide par unité de temps, et $\gamma_a$ est le gradient de cisaillement apparent (ou gradient de vélocité apparent) à un point sur la paroi.

**2.** Procédé selon la revendication 1, dans lequel ledit tube fin est une aiguille creuse de perçage (22).

**3.** Dispositif pour la mesure de la viscosité d'un liquide, comprenant :

un récipient tubulaire (12) scellé et maintenu à une pression réduite par une paire d'obturateurs en un matériau élastique (16, 18) montés à chaque ouverture dudit récipient (12),

un tube fin creux (22) de diamètre uniforme conçu pour être enfoncé par perçage dans l'un (18) desdits obturateursafin de le faire pénétrer dans ledit récipient (12),

un capteur de pression (40) conçu pour être relié audit récipient (12) par des moyens (34) pour percer l'autre obturateur (16) afin de détecter une pression interne dudit récipient (12),

un convertisseur analogique-numérique (42) relié électriquement audit capteur de pression (40) pour convertir ses signaux analogiques en signaux numériques, et

un calculateur (44) pour traiter des signaux de sortie du convertisseur analogique-numérique (42) afin de déterminer une viscosité du liquide à partir desdits signaux de sortie et des équations suivantes :

$$\gamma(\tau_w) = - \mathrm{d}u/\mathrm{d}r = 3\gamma_a/4 + (\tau_w/4)(\mathrm{d}\gamma_a/\mathrm{d}\tau_w)$$

$$\tau_w = \Delta PR/2L$$

$$\gamma_a = 4Q/\pi R^3$$

dans lesquelles $\gamma(\tau_w)$ est un gradient de cisaillement, ou gradient de vélocité, du liquide, $\tau_w$ est une contrainte de cisaillement du liquide, $\Delta P$ est une différence de pression entre les deux extrémités du tube fin (22), R est un rayon du tube fin (22), L est une longueur du tube fin, Q est un valeur d'écoulement du liquide par unité de temps, et $\gamma a$ est le gradient de cisaillement apparent (ou gradient de vélocité apparent) à un point sur la paroi.

# Fig. 1

PRESSURE SENSOR — 40

A/D CONVERTER — 42

COMPUTER — 44

EP 0 492 664 B1

Fig. 2

Fig. 3

14

# Fig.4A

Flowchart:

**1** — READ INITIAL VALUE $P_A, V_0, R, L$

**2** — READ $P_0$

**3** — READ $P_i$

**4** —
$$V_i = P_0 \cdot V_0 / P_i$$
$$v_i = V_0 - V_i$$
$$Q_i = dv_i / dt$$

**5** — $\Delta P_i = P_A - P_i + \rho g(h_i - H_i - L)$

**6** —
$$\tau_{wi} = \Delta P_i R / 2L$$
$$\gamma_i = 4Q_i / \pi R^3$$

# Fig.4B

```
                                    ┌──────────────────────┐
                              YES   │  NEWTONIAN MODEL     │
          ┌──────────────┐ ────────►│  CALCULATE  μ        │  20
     7    │ FLOW MODEL   │          └──────────────────────┘
          │ DESIGNATED   │          ┌──────────────────────┐
          └──────────────┘          │  EXPONENTIAL MODEL   │
                 │ NO               │  CALCULATE  μ        │  30
                 │                  └──────────────────────┘
                 │                  ┌──────────────────────┐
                 │                  │  BINGHAN  MODEL      │
          ┌──────────────┐          │  CALCULATE  μ        │  40
     8    │ CALCULATION OF│         └──────────────────────┘
          │ N_OS, R_COS, R_CBI,│    ┌──────────────────────┐
          │ R_CNE  AND R_CCA  │     │  CASSON MODEL        │
          └──────────────┘          │  CALCULATE  μ        │  50
                 │                  └──────────────────────┘
                 │
          ┌──────────────┐   YES    ┌──────────────────────┐
     9    │ 0.9 < N_OS < 1.1 │─────►│  NEWTONIAN MODEL     │
          └──────────────┘          │  CALCULATE  μ        │
                 │ NO               └──────────────────────┘
                 │
          ┌──────────────┐   YES    ┌──────────────────────┐
     10   │ R_COS > R_CBI    │─────►│  EXPONENTIAL MODEL   │
          │ R_COS > R_CCA AND│      │  CALCULATE  μ        │
          └──────────────┘          └──────────────────────┘
                 │ NO
                 │
          ┌──────────────┐   YES    ┌──────────────────────┐
     11   │ R_CBI > R_CCA   │─────► │  BINGHAM MODEL       │
          └──────────────┘          │  CALCULATE  μ        │
                 │ NO               └──────────────────────┘
                 │
          ┌──────────────┐
          │ CASSON MODEL │
          │ CALCULATE  μ │
          └──────────────┘
```

Step 7: FLOW MODEL DESIGNATED — YES → NEWTONIAN MODEL CALCULATE $\mu$ (20), EXPONENTIAL MODEL CALCULATE $\mu$ (30), BINGHAN MODEL CALCULATE $\mu$ (40), CASSON MODEL CALCULATE $\mu$ (50)

Step 8: CALCULATION OF $N_{OS}$, $R_{COS}$, $R_{CBI}$, $R_{CNE}$ AND $R_{CCA}$

Step 9: $0.9 < N_{OS} < 1.1$ — YES → NEWTONIAN MODEL CALCULATE $\mu$

Step 10: $R_{COS} > R_{CBI}$ AND $R_{COS} > R_{CCA}$ — YES → EXPONENTIAL MODEL CALCULATE $\mu$

Step 11: $R_{CBI} > R_{CCA}$ — YES → BINGHAM MODEL CALCULATE $\mu$ — NO → CASSON MODEL CALCULATE $\mu$

Fig. 5

EP 0 492 664 B1

Fig. 6

EP 0 492 664 B1

Fig. 7

EP 0 492 664 B1

Fig. 8

$\mu = 1.41 \exp(0.0194 \cdot Ht)$

Ht (%)

$\mu (Pa \cdot sec)$

$10^{-2}$

$10^{-3}$

Fig. 9

EP 0 492 664 B1

Fig. 10

EP 0 492 664 B1